# EUROPEAN PATENT APPLICATION

(11) **EP 4 202 409 A1**
(43) Date of publication of application: **28.06.2023**
(21) Application number: 21217122.7
(22) Date of filing: 22.12.2021
(51) Int. Cl.: G01N 21/21, G01N 21/47, G01N 21/95

(54) **RESONANT SCATTERING SPECTROSCOPY BASED WAFER SCALE TESTING**

(71) Applicant: Munster Technological University, Bishopstown T12 P928 Cork (IE)
(72) Inventor: The designation of the inventor has not yet been filed
(74) Representative: Purdylucey Intellectual Property

(57) **Abstract**

The present disclosure discloses a system for wafer scale testing of an integrated circuit using resonance spectrum spectroscopy (RSS), that includes a camera system, a control system for positioning a a semiconductor wafer to a position, at which the camera system focuses on the resonant component, an illumination system for illuminating the resonant component with an incident light when the resonant component is at said position, wherein upon receiving the incident light, the resonant component scatters back light into orthogonal polarization, and wherein the scattered light has a wavelength matching with a resonance wavelength of the resonant component, and a spectrometer system for analysing the scattered light to generate a signal that is characteristic of the resonant component.

## Description

### Field

The present disclosure is directed towards wafer scale testing of photonic integrated circuits, and more specifically to testing of photonic integrated circuits based on RSS technique.

### Background

Today's industries are based on internet services and reply upon huge data centre support for data storage and communications, which has created an almost insatiable demand for optical data communications links.

Existing optical transceivers are based on Mach- Zehnder interferometers which have very high-power consumption. To reduce the power consumption, advanced transceiver technology is being developed based on silicon photonic crystals (PhCs), and micro-ring resonators (MRRs). These advanced technology-based transceivers exhibit aggregate speeds up to Terabit/s with low power consumption and promise to be the next generation of optical interconnects.

However, one of the main bottlenecks to realising advanced transceiver technology, is the lack of wafer scale testing techniques. Typically, 8-inch silicon wafers contain thousands of photonic devices with either PhCs or MRRs as the main functional blocks, along with waveguides and couplers. Unlike indium phosphide lasers, silicon devices do not emit light which makes rapid screening and testing difficult. Also, existing testing systems test complete photonic integrated circuits only and do not provide information directly on the individual photonic components.

Presently, the wafer scale testing methods for PhCs are mainly focused on either coupling the fibres to a grating coupler or the evanescent coupling to an overhanging optical fibre. However, the overhanging fibres are sensitive and require frequent replacements, forcing downtimes during operation of the equipment. Also, the additional grating couplers consume precious real estate on the wafer and complicate the actual device layout.

Hence, in view of the above, there is a need for a wafer testing method and system that overcomes the problems associated with the prior art, and that is non-invasive and has high throughput.

### Summary

In one aspect of the present invention, there is provided a system for wafer scale testing of an integrated circuit using resonance spectrum spectroscopy (RSS). The system includes a camera system, a control system for positioning a semiconductor wafer to a position, at which the camera system focuses on a resonant component, an illumination system for illuminating the resonant component with an incident light when the resonant component is at said position, wherein upon receiving the incident light, the resonant component scatters back light into orthogonal polarization, and wherein the scattered light has a wavelength matching with a resonance wavelength of the resonant component, and a spectrometer system for analysing the scattered light to generate a signal that is characteristic of the resonant component.

In an embodiment of the present invention, the illumination system comprises a first light source system that emits light at a predefined set of wavelengths, a dichroic mirror that reflects the emitted light in an orthogonal direction, towards the semiconductor wafer, a second light source system that emits visible light; and a beam splitter that reflects the visible light in an orthogonal direction, towards the semiconductor wafer, wherein the reflected light from the dichroic mirror and beam splitter are parallel to each other.

In an embodiment of the present invention, the control system comprises a stage for housing the semiconductor wafer, and a controller operably coupled to the stage and to the camera system for controlling a movement of the stage, wherein the controller implements a machine-learning based pattern recognition process based on a wafer map, to automatically identify an optical circuit on the semiconductor wafer and move the stage to bring the optical circuit into a focus of the camera system.

In an embodiment of the present invention, the system further includes a high-numerical aperture objective that has a short focal length and is disposed close to the semiconductor wafer, so that the light from the semiconductor wafer comes to a focus inside the high-powered magnifying glass , once the resonant component is found, wherein the camera system records and displays the image captured by the high-powered magnifying glass, and a beam splitter for receiving backward scattered light from the semiconductor wafer and reflecting the backward scattered light in an orthogonal direction, towards the spectrometer system.

In an embodiment of the present invention, the spectrometer system further includes an analyser for acquiring and analysing the back scattered light in crossed polarization, a collimator for generating a parallel beam of acquired light, and a spectrometer for measuring a wavelength and frequency of the parallel beam, for identifying and analysing one or more spectral features of one or more resonant components of the optical circuit.

In an embodiment of the present invention, the first light source system includes a probe laser that emits Infrared (IR) light and is tunable with a broad tuning range to cover a resonance regime of the plurality of optical circuits of the semiconductor wafer, a collimator for generating a parallel beam of the IR light, and a polarizer for polarizing the parallel beam of IR light.

In an embodiment of the present invention, the first light source system includes one of: a Super Luminescent Diode (SLD) and an Amplified Spontaneous Emission (ASE) light source.

In an embodiment of the present invention, the second light source system includes a non-coherent light source for generating the visible light, a collimator for generating a parallel beam of the visible light, and an optical filter for filtering the parallel beam of the visible light.

In an embodiment of the present invention, the camera system comprises a camera, an optical component for magnifying the optical circuit that is in focus of the camera, and an optical filter for reducing an intensity of light reflected from the first and second light source systems towards the camera.

In an embodiment of the present invention, each optical circuit includes at least one of: a Photonic crystal structure with a defect of three structures (PhC L3 cavity) and a Magnetic Ring Resonator (MRR).

In an embodiment of the present invention, a cavity axis of the optical circuit forms an angle of 45° with respect to the polarizer and the analyser.

In an embodiment of the present invention, the system further includes a process monitoring and critical dimension measurement system, during the manufacture of semiconductor devices.

In an embodiment of the present invention, the test patterns are included on the wafer for purpose of facilitating the measurement.

Various embodiments of the present invention employ a non-invasive and high throughput optical wafer testing method based on resonant scattering spectroscopy (RSS) technique. The most innovative part of the proposed invention is the component level non-invasive wafer scale method of characterization with complete automation using latest machine vision technology. The high throughout is due to wafer scale automation. Further, the RSS based wafer scale testing technology test individual resonant components of the optical circuits on a wafer scale. The testing of individual resonant components provides substantial cost savings both during prototyping and mass production of optical circuits by screening the working dies, thus saving costs in further processing steps. The RSS based wafer scale testing technology requires low maintenance and low consumables compared to the existing and emerging technologies in the market that are based on either fibre probes or evanescent coupling. Further advantages of said technology are that additional components are not required to be fabricated, thereby saving real estate on the wafer.

### Brief Description of the Drawings

The invention will be more clearly understood from the following description of an embodiment thereof, given by way of example only, with reference to the accompanying drawings, in which:-
FIG.1 illustrates a system for wafer scale testing of an integrated circuit, in accordance with an embodiment of the present invention;
FIGs. 2A-2E illustrate zoomed views of the sample that undergoes wafer scale testing;
FIGs. 3A and 3B illustrate SEM images of an optical circuit of the sample that undergoes wafer scale testing; and
FIG. 4 illustrates a resonance spectrum of a PhC L3 cavity of a photonic integrated circuit (PIC) of the wafer, when it undergoes wafer scale testing using the system of FIG.1.

### Detailed Description of the Drawings

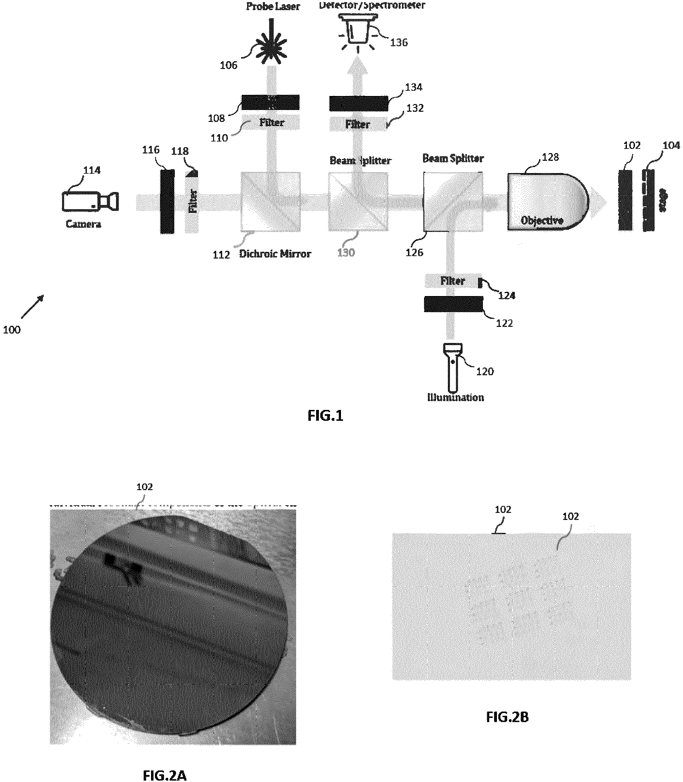

FIG.1 illustrates a system 100 for wafer scale testing of an integrated circuit, in accordance with an embodiment of the present invention.

The system 100 includes a sample 102, i.e. the semiconductor wafer under test and a stage 104 for housing the sample 102. The sample 102, hereinafter also referred to as wafer 102 include various photonic integrated circuits (PIC), and each PIC may include multiple resonant elements such as magnetic ring resonators (MRR), photonic crystal cavities (PhC), and like. The resonant components may be hereinafter alternatively referred to as devices, and vice versa.

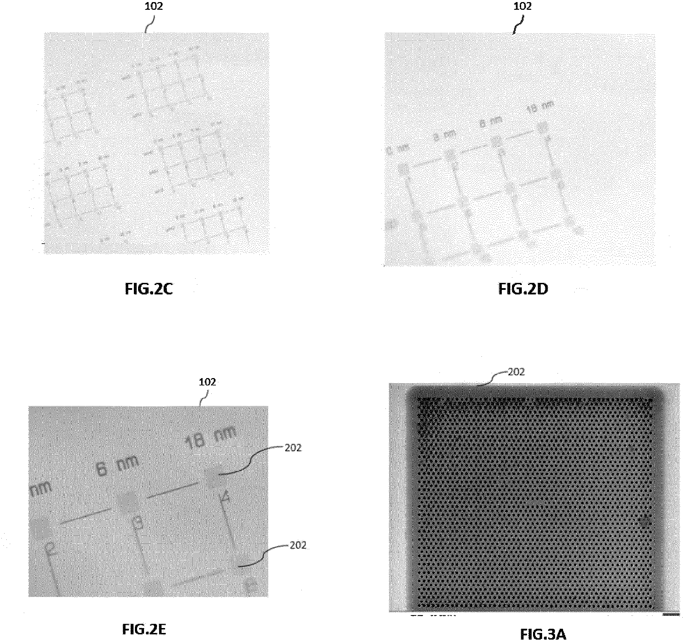

An exemplary sample 102 is illustrated with reference to FIG.2A. The sample 102 is a semiconductor wafer of size 2 cm x 2cm. FIG.2B illustrates an enlarged view of the sample 102, when the sample 102 is zoomed at 5x. FIG.2C illustrates an enlarged view of the sample 102, when the sample 102 is zoomed at 20x. FIG.2D illustrates an enlarged view of the sample 102, when the sample 102 is zoomed at 50x. FIG.2E illustrates an enlarged view of the sample 102, when the sample 102 is zoomed at 100x. It can be seen in all the zoomed views, that the sample 102 includes multiple optical circuits 202. Each optical circuit 202 is a PIC that includes multiple resonant components, such as PhC L3 cavities (Photonic crystal structures with a defect of three structures). Thus, the sample 102 includes hundreds of such resonant components/cavities.

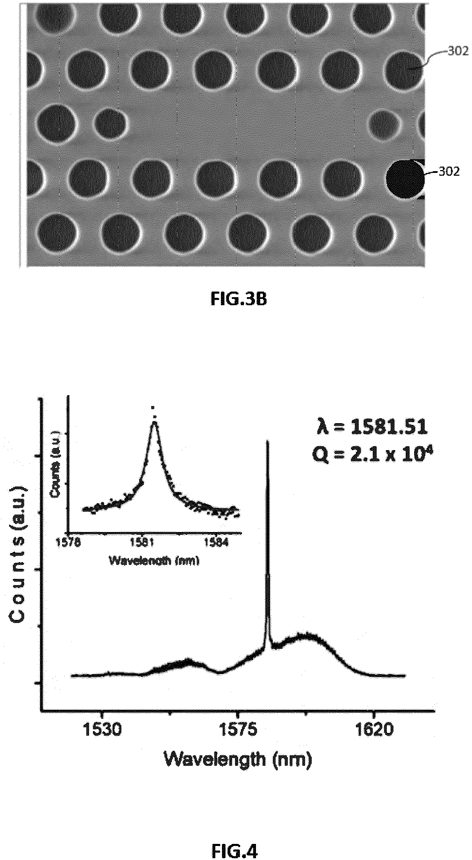

FIG.3A illustrates a Scanning Electron Microscope (SEM) image of each optical circuit 202 of the sample 102, in accordance with an embodiment of the present invention. FIG.3B illustrates an enlarged SEM image of the optical circuit 202 showing multiple PhC L3 cavities 302 therein.

Referring back to FIG.1, the stage 104 is configured to move in two dimensions, i.e. along X and Y axis and if required, along Z axis, precisely at high resolution. In the context of the present invention, the stage 104 is configured to move precisely to adjust a position of the sample 102. Using X and Y translation, the sample 102 may be navigated to a desired location and the Z axis is used to focus and obtain the spectra of specific device on the sample 102. In an embodiment of the present invention, the stage 104 is controlled through a software program running on a controller (not shown) connected to the stage 104. The stage 104 has programmable translation stages which has 3 degrees of freedom (X, Y, & Z) on the wafer with submicron accuracy. These stages move as directed by a wafer map defined in the software program. The wafer map is the digital map of all the devices (devices 202, see, FIG.2E) fabricated on the wafer 102. With the help of the wafer map, the software program may recognize the patterns and instruct the translation stages to move and find the respective pattern (device) on the physical wafer, i.e. sample 102. Once the device 202 is found, the autofocus may adjust the objective (lens) 128 for optimal probing and collection of the light. The stage 104 and the controller (not shown), both together form a control system for operably controlling the movement of the semiconductor wafer.

In an embodiment of the present invention, the software program may implement a machine-learning based pattern recognition program for automated recognition of patterns and regularities on the wafer 102. The resonant components fabricated on the wafer 102 may be of certain regular patterns such as squares, circle, etc. The software program is configured to recognize these patterns and navigate to resonant components for visualisation and subsequent characterisation. The recognizing of these patterns helps to speed up the transition from one resonant component to another resonant component on the wafer 102. Further, the pattern recognition program may be trained based on previous imaging of the wafers. Once trained, the wafer map of the wafer 102 may be fed to the pattern recognition program to automatically identify the resonant components on the wafer 102.

The system 100 includes a camera system, a control system for positioning a semiconductor wafer to a position, at which the camera system focuses on a resonant component, an illumination system for illuminating the resonant component with an incident light when the resonant component is at said position, wherein upon receiving the incident light, the resonant component scatters back light into orthogonal polarization, and wherein the scattered light has a wavelength matching with a resonance wavelength of the resonant component, and a spectrometer system for analysing the scattered light to generate a signal that is characteristic of a resonant component of the resonant com ponent.

The illumination system includes a first light source system for emitting light at a specific wavelength, or a set of wavelengths. The first light source system includes a probe laser 106, the collimator 108, and the polarizer 110. The probe laser 106 is selected based on the resonant components being characterized. This is the most important factor for selection both in terms of the sample responsiveness, and so the type of application, as well as optics used. Usually, the probe laser 106 is a tunable laser with a broad tuning range, so that it covers the resonance regime of the characterizing resonant components of the sample 102. In the preferred embodiment, the probe laser 106 is a coherent light source which emits IR light and forms a speckled spot rather than an image of the resonant component on which it is projected. Although, the probe laser 106 is being used herein, it would be apparent to one of ordinary skill in the art, that alternative light sources such as Super Luminescent Diode (SLD) and Amplified Spontaneous Emission (ASE) light sources may be used instead of the probe laser 106.

Also, it would be apparent to one of ordinary skill in the art, that most of the PICs which are used for telecommunications work in the IR regime, therefore, in the present system 100, IR light is being used to see how it works in that spectral regime. However, if a PIC is designed to work at some other spectral region other than the IR spectral regime, then a coherent light source may be used that covers the spectral region of operation of the PIC.

Further, the light emitted by the probe laser 106 passes through the collimator 108 and the filter/polarizer 110. The collimator 108 is typically a device for changing a diverging light from a point source into a parallel beam. This collimation of the light is required to make specialized measurements in spectroscopy and in geometric and physical optics. The filter 110 is a polarization filter that may be compatible with the probe laser wavelength. The filter 110 is an optical filter that lets light waves of a specific polarization pass through while blocking light waves of other polarizations. The filter 110 may filter a beam of light of undefined or mixed polarization into a beam of well-defined polarization.

The light emitted by filter 110 is received by a dichroic mirror 112 which is a mirror with significantly different reflection or transmission properties at two different wavelengths. The two different wavelengths mean two wavelength band with not so large width. The dichroic mirror 112 is alternatively referred to as a dual-band mirror, a dual-wavelength mirror, and a dichroic reflector. In the present setup, the dichroic mirror 112 is configured to reflect IR light from the probe laser 106 in an orthogonal direction towards the sample 102. Although, the dichroic mirror 112 is being used herein, it would be apparent to one of ordinary skill in the art, that a beam splitter can be used instead of the dichroic mirror 112.

The camera system includes a camera 114, an optical component 116, and an optical filter 118. The camera 114 is mainly provided for imaging of the sample 102 and also for autofocusing of the entire setup. The camera 114 is configured to capture an image of the sample 102 in both visible region and near infrared region of the electromagnetic spectrum. An example of the camera 114 includes an InGaA based CCD camera. The optical component 116 and the optical filter 118 are mainly used as supporting components for the camera 114. The optical component 116 is typically used to change behaviour and properties of light. In an example, the optical component 116 is a biconvex lens that facilitates magnification of the resonant component to be characterised in the sample 102. The optical filter 118 is a device that selectively transmits light of different wavelengths, usually implemented as a glass plane or plastic device in the optical path, which are either dyed in the bulk or have interference coatings. In an example, the optical filter 118 is a neutral density filter which is used to reduce the intensity of IR light from the laser 106 to the camera 114 so that camera 114 won't be saturated. With the neutral density filter in place, the camera 114 is able to visualise the IR light spot from the laser 106 on the sample 102.

In an embodiment of the present invention, the camera 114 is configured to locate devices (for example, devices 202) in the sample 102 that are to be characterised. The sample 102 may include multiple resonant components , and at one time, one resonant component needs to be brought into focus, so that the laser 106 can emit IR light onto the same. The autofocus function of the camera 114 is to bring a device to be measured into the focus. Although, not shown, a feedback loop may be provided between the camera 114 and the controller (not shown) controlling the movement of the stage 104. The stage 104 is precisely moved till the camera 114 is able to focus on a resonant component of the sample 102. As mentioned before, the stage 104 is controlled to move the sample 102 to an optimal position, such that the camera 114 focusses on a single resonant component. In the optimal position, the laser 106 is projected onto the resonant component to obtain best possible signal-to-noise ratio of the resonant component.

The illumination system further includes a second light source system that is formed of a non-coherent light source 120, a collimator 122 and an optical filter 124. The non-coherent light source 120 transmits light through a translucent object on to the sample 102 for viewing. In an example, the non-coherent light source 120 may be an LED or halogen that forms an image of the sample 102. The collimator 122 creates parallel illumination onto the sample 102.

The beam splitter 126 directs the visible light from the non-coherent light source 120 in an orthogonal direction towards the sample 102. A typical beam splitter is an optical component that is configured to split an incident light at a designated ratio into two separate beams, in that part of the light is reflected, and part of the light is transmitted. The reflected light from the dichroic mirror 112 and the beam splitter 126 are parallel to each other.

Thus, the sample 102 receives the IR light from the probe laser 106 and visible light from the non-coherent light source 120. The non-coherent light source 120 along with the camera 114 are used for characterising the visualisation of the device. The illumination generated by the non-coherent light source 120 is parallel to that of the probing laser 106. The significance of parallel illumination is to make sure that the sample 102 is imaged evenly and the sample 102 is on the imaging plane. If the illumination generated by the non-coherent light source 120 is not parallel to that of the probing laser 106, the device imaged and device measured would be different.

The objective lens 128 is a very a high-numerical aperture that has a short focal length and is disposed close to the semiconductor wafer, so that the light from the semiconductor wafer 102 comes to a focus inside the microscopic tube including the objective lens 128, once the resonant component is found. The camera system records and displays the image captured by the objective lens 128 similar to a microscope.

When a resonant component of the sample 102 that is in focus of the camera 114, is illuminated with the probe laser 106, and the non-coherent source 120, the light with a wavelength matching that of the device's resonance wavelength is scattered into the orthogonal polarisation giving a signal that is characteristic of the resonant component (PhC L3 cavity). The reflected light from the sample 102 is received by the beam splitter 130 which directs the backward scattered light from the sample 102 towards a spectrometer system. The spectrometer system is formed of an analyser 132, a collimator 134, and a spectrometer 136.

The back scattered light is rapidly acquired and analysed in crossed polarization by means of the analyser 132. The spectrometer 136 measures the wavelength and frequency of received light and facilitates identification and analysis of the spectral features of the focussed resonant components of the sample 102. The basic function of the spectrometer 136 is to receive light, split the received light into its spectral components, digitize the signal as a function of wavelength, and read it out and display it via a computer (not shown). The back scattering of light that has a wavelength matching that of the device's resonance wavelength is referred to as resonance scattering spectroscopy (RSS).

It is to be noted that the sample 102 is oriented so that the cavity axis of the resonant component forms an angle of 45° with respect to both the polarizer 110 and the analyser 132. The orthogonal placement of the probe laser 106, the spectrometer 136 and the non-coherent light source 120 makes it possible to combine the illumination light and probe laser light into one-axis, so that the probe laser 106 would shine on the correct PIC element/cavity. Also, the placement of the resonant component at 45 degrees makes it possible to enhance a component of incoming light to resonate within the cavity at the resonant wavelength. This resonated light would be reflected back in the orthogonal direction. A part of this reflected light would pass through the crossed polarization at the analyser 132. All other wavelengths which do not match the resonance wavelength of the cavity will not be enhanced. Therefore, any reflected light from these wavelengths would not pass through the cross-polarizer/analyzer 132. In this way, signal-to-noise ratio would increase.

Various experiments have been conducted in which wafers of various sizes have been characterised with the current system 100 with a throughput speed of a few seconds per device. Several L3 cavities have been studied, and a Q-factor of the order of tens of thousands for an optimised L3 cavity have been achieved. This technique allows a complete characterisation of the modes of a defect state in a photonic device, in terms of quality factor, line shape and coupling efficiency, without loading effects. These parameters are measured only when the resonance peak is identified. FIG. 4 illustrates a resonance spectrum of a PhC L3 cavity of a photonic integrated circuit (PIC) of the wafer 102, when the PIC is focussed, and illuminated, using the system of FIG.1. Thus, resonance spectrum of each PhC L3 cavity may be generated in this manner, leading to testing of each resonant element. In an embodiment of the present invention, machine learning algorithms may help in identifying resonance peaks (signal) from the background of backscattered light (noise).

Thus, the system 100 enable testing of individual photonic/resonant components and provides substantial cost savings both during prototyping and mass production of photonic circuits by screening the working dies, thus saving costs in further processing steps. The RSS based wafer scale testing technology is the first technology to test individual resonant components of the optical circuits on a wafer scale. The system 100 includes free-space optics-based set-up, so that it can be integrated easily at foundries. The most innovative part of the proposed invention is the component level non-invasive wafer scale method of characterization with complete automation using latest machine vision technology.

The RSS technique can also be extended to test ring resonator devices in a manner similar to that of L3 cavities. Further, the system 100 can be used to monitor the wafer processing during the fabrication steps such as cleaning, oxidation, deposition, lithography, and wet etching. For this purpose, a standard testing pattern may be supplied to be included in the fabrication process and the system 100 may conduct the tests on this pattern to determine the quality of fabrication by estimating the deviation of quality factor of the resonators. These test patterns can then infer about the quality of various major fabrication steps (e.g., cleans, oxidation, deposition, lithography, wet-etch, critical dimension ("CD")). Currently, CD-tests are used for the above-mentioned process-monitoring where MOS capacitor devices (with either polysilicon or aluminium as the top-electrode) are used as test patterns. The CD performance is measured and compared to baseline values, a shift in the Vt indicates a problem. This invention can also be scaled or adapted for, but not limited to, high throughput volumetric imaging of bio samples, investigating polymers, coatings, and emulsions in material science.

In the specification the terms "comprise, comprises, comprised and comprising" or any variation thereof and the terms include, includes, included and including" or any variation thereof are considered to be totally interchangeable, and they should all be afforded the widest possible interpretation and vice versa.

The invention is not limited to the embodiments hereinbefore described but may be varied in both construction and detail.

## Claims

1. A system for wafer scale testing of an integrated circuit using resonance spectrum spectroscopy (RSS), comprising:
a camera system;
a control system for positioning a semiconductor wafer to a position, at which the camera system focuses on a resonant component;
an illumination system for illuminating the resonant component with an incident light when the resonant component is at said position, wherein upon receiving the incident light, the resonant component scatters back light into orthogonal polarization, and wherein the scattered light has a wavelength matching with a resonance wavelength of the resonant component; and
a spectrometer system for analysing the scattered light to generate a signal that is characteristic of the resonant component.

2. The system as claimed in claim 1, wherein the illumination system comprises:
a first light source system that emits light at a predefined set of wavelengths;
a dichroic mirror that reflects the emitted light in an orthogonal direction, towards the semiconductor wafer;
a second light source system that emits visible light; and
a beam splitter that reflects the visible light in an orthogonal direction, towards the semiconductor wafer, wherein the reflected light from the dichroic mirror and beam splitter are parallel to each other.

3. The system as claimed in claim 1, wherein the control system comprises:
a stage for housing the semiconductor wafer; and
a controller operably coupled to the stage and to the camera system for controlling a movement of the stage, wherein the controller implements a machine-learning based pattern recognition process based on a wafer map, to automatically identify an optical circuit on the semiconductor wafer and move the stage to bring the optical circuit into a focus of the camera system.

4. The system as claimed in claim 1 further comprising:
a high-numerical aperture objective that has a short focal length and is disposed close to the semiconductor wafer, so that the light from the semiconductor wafer comes to a focus inside the high-powered magnifying glass, once the resonant component is found, wherein the camera system records and displays the image captured by the high-powered magnifying glass;
a beam splitter for receiving backward scattered light from the semiconductor wafer and reflecting the backward scattered light in an orthogonal direction, towards the spectrometer system.

5. The system as claimed in claim 1, wherein the spectrometer system comprises:
an analyser for acquiring and analysing the back scattered light in crossed polarization;
a collimator for generating a parallel beam of acquired light; and
a spectrometer for measuring a wavelength and frequency of the parallel beam, for identifying and analysing one or more spectral features of one or more resonant components of the optical circuit.

6. The system as claimed in any preceding claim, wherein the first light source system comprises:
a probe laser that emits Infrared (IR) light and is tunable with a broad tuning range to cover a resonance regime of the plurality of optical circuits of the semiconductor wafer;
a collimator for generating a parallel beam of the IR light; and
a polarizer for polarizing the parallel beam of IR light.

7. The system as claimed in claim 4, wherein the first light source system includes one of: a Super Luminescent Diode (SLD) and an Amplified Spontaneous Emission (ASE) light source.

8. The system as claimed in any preceding claim, wherein the second light source system comprises:
a non-coherent light source for generating the visible light;
a collimator for generating a parallel beam of the visible light; and
an optical filter for filtering the parallel beam of the visible light.

9. The system as claimed in any preceding claim, wherein the camera system comprises a camera, an optical component for magnifying the optical circuit that is in focus of the camera, and an optical filter for reducing an intensity of light reflected from the first and second light source systems towards the camera.

10. The system as claimed in any preceding claim, wherein each optical circuit includes at least one of: a Photonic crystal structure with a defect of three structures (PhC L3 cavity) and a Magnetic Ring Resonator (MRR).

11. The system as claimed in any preceding claim, wherein a cavity axis of the optical circuit forms an angle of 45° with respect to the polarizer and the analyser.

12. The system as claimed in any preceding claim, further comprising a process monitoring and critical dimension measurement system, during the manufacture of semiconductor devices.

13. The system as claimed in claim 12, wherein test patterns are included on the wafer for purpose of facilitating the measurement.
